# EUROPEAN PATENT SPECIFICATION

(11) **EP 3 527 705 B1**
(45) Date of publication and mention of the grant of the patent: **23.12.2020**
(21) Application number: 18207170.4
(22) Date of filing: 20.11.2018
(51) Int. Cl.: D03D 9/00, B01D 39/10, B07B 1/46, D03D 15/02, B01D 39/12, D03D 15/08

(54) **WIRE CLOTH**
DRAHTGEWEBE
TISSU EN FIL MÉTALLIQUE

(30) Priority: 20.02.2018 IT 201800002882
(43) Date of publication of application: 21.08.2019
(73) Proprietor: ALFATECH S.R.L., 21049 Tradate (Varese) (IT)
(72) Inventor: PANEBIANCO, Luigi, 21049 Tradate (Varese) (IT)
(74) Representative: Tansini, Elio Fabrizio

(56) References cited:
- EP-A2- 1 420 624
- WO-A1-2010/060907
- DE-A1-102015 002 001
- DE-U1-202009 018 942

## Description

The present invention relates to a wire cloth.

In particular, the present invention refers to a cloth or, more generally, to a "textile" type structure made of metallic thread-like elements suitably combined according to weave and warp.

As known, the wire cloths find many applications, as in particular in the machinery for processing polymeric materials, in which the woven structure constitutes a filtering member of the aforementioned materials.

In this situation, the wire cloths are hit by the plastic material flow which is processed by the machinery, and must therefore undergo considerable efforts, temperatures and pressures, or in any case they must face highly peculiar working conditions due to the nature and/or state of aggregation (granular, dusty, fluid or multi-phase) of the polymeric material itself.

The dimensions of the weave and warp threads, as well as the woven structure, is therefore determined according to the various needs of use and according to the material and working conditions to which the cloth is subjected.

Wire cloths of the known type are however generally characterized by some considerable drawbacks, and mainly suffer from a limited operating life, a high tendency to geometric and mechanical degradation, an inconstancy over time of the filtering power and the need for frequent replacement and maintenance interventions.

A particular drawback of the wire cloths is given by the presence of passages and spacings defined between the filaments and in particular between the weave threads.

These spacings creates fluid passage channels that allow the material to flow out transversely from the flow direction of the material into fluid form.

It should be noted, in fact, that the warp threads, much finer than the weave threads, tend to compact under mechanical deformation, making the seal more stable when the fluid passes through. On the contrary, the weave threads are thicker than the warp threads and are more spaced, so as to define the aforementioned flow passage channels. In this context, also upon the pressure determined laterally to the cloth and by means of suitable retaining members of the cloth itself, the channels remain open in any case and, at high pressure conditions, allow the fluid to flow out transversely from the cloth.

This results in an important drawback in terms of efficiency in filtering operations as well as safety in surfaces that must be sealed to prevent the work material from flowing out.

Also known are wire cloths with lateral reinforcement bands or with folded edges. However, these technical solutions allow to mechanically reinforce the mesh structure, without however tamponing the outflow of the material flow along the channels defined by the weave threads.

In the light of the state of the art presented above, the object of the present invention is to provide a wire cloth which is capable of solving the shortcomings just presented.

In particular, the present invention aims to devise a wire cloth which can simultaneously have satisfactory resistance and mechanical-geometric consistency values, and capable of preventing any lateral outflows of the fluid material.

In greater detail, the present invention has as its object devising a wire cloth which is able to occlude any passage channels defined between the wire filaments and in particular the weave threads.

Moreover, the present invention intends to provide a wire cloth which, as described above, is capable of occluding the mentioned channels defined between the weave threads only in the lateral zones of the cloth and thus allowing the presence of a work area provided with a high filtering capacity.

These and other objects are realized by a wire cloth, according to the present invention, having the features illustrated in the annexed claims and hereinafter illustrated in an exemplary embodiment thereof (but not limiting) as well as in the attached drawings, in which:
- figure 1 shows a perspective view of a wire cloth according to a first embodiment of the invention;
- figure 2 shows a perspective view of a wire cloth according to a second embodiment of the invention;
- figure 3 shows a cross-sectional and along the line III-III view of the cloth of figure 1;
- figure 4 shows a cross-sectional and along the line IV-IV of the cloth of figure 2; and
- figure 4a shows an enlargement of a detail of the cross-sectional view of figure 4.

With reference to the attached figures, reference number 1 globally indicates a wire cloth according with the present invention.

In particular, the cloth 1 comprising a woven structure 2 defined by a weave 3 and a warp 4 woven with the weave 3.

In greater detail, the weave 3 has a plurality of first thread-like elements 3a made preferably of a metallic material.

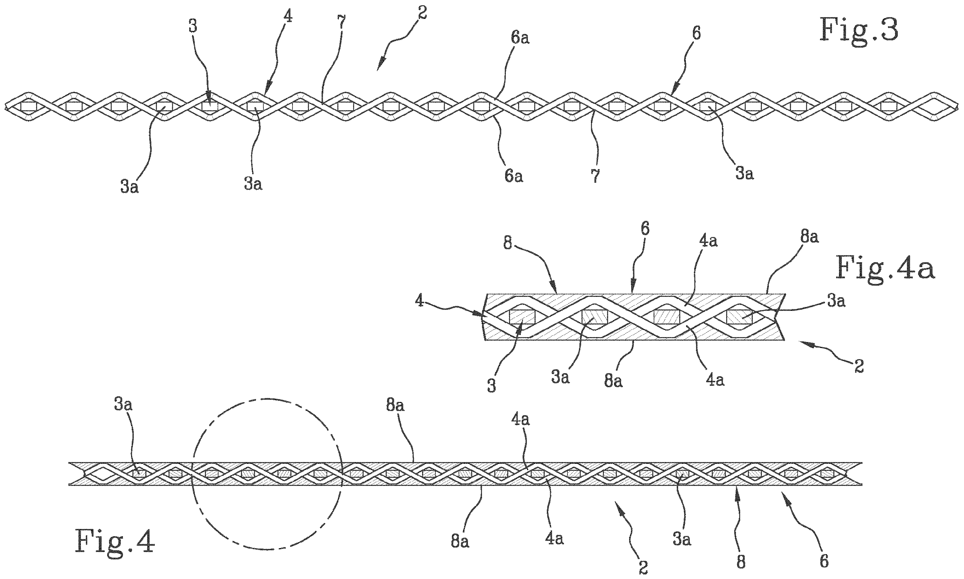

Likewise, the warp also comprises a plurality of second thread-like elements 4a made at least partially of metallic material, and woven with the first elements 3a according to a predefined woven geometric pattern. The first thread-like elements 3a preferably have a greater thickness than the second thread-like elements 4a. By virtue of this difference, the first elements 3a are more spaced and define between each other respective channels 7 (figure 3) parallel to the development of the weave 3.

The woven structure 2 thus defined preferably has a substantially rectangular peripheral development plain configuration, where two opposite longitudinal edges 2a are defined.

The structure 2 advantageously comprises at least a lateral zone 5 parallel to the warp 4 and approached to a respective edge 2a, the zone 5 developing as a strip along the whole longitudinal development of the cloth 1.

The lateral zone 5 having respective deformation means 6 for occluding the channels 7 at the zone 5 itself.

Preferably, the structure 2 has two lateral zones 5 opposite to each other parallel and close to the respective longitudinal end edges 2a. In this situation, each lateral zone 5 is provided with respective deformation means 6.

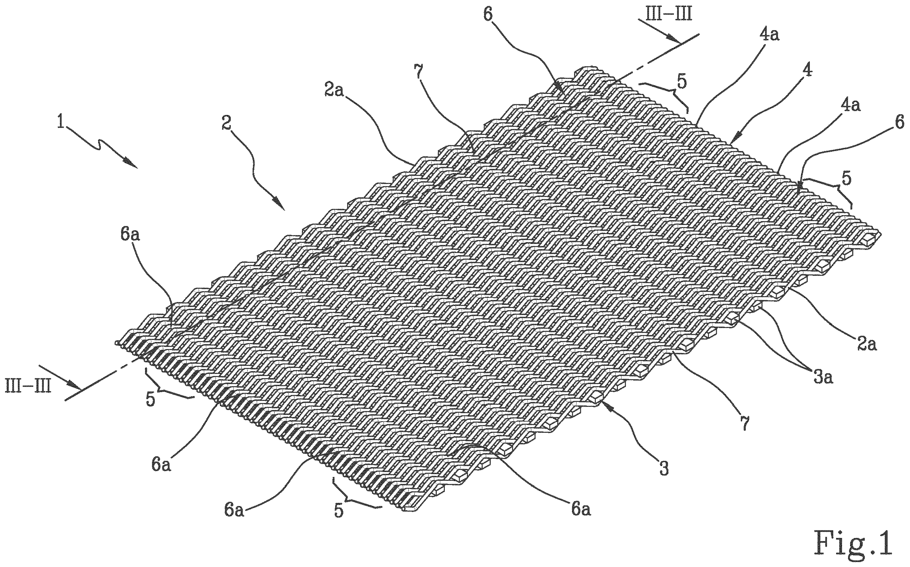

With reference to the first embodiment of figures 1 and 3, the deformation means 6 comprise second additional thread-like elements 6a, made of a material resistant to high temperatures and deformable when subjected to crushing. In other words, the second additional elements 6a are parallel to the second elements 4a and together constitute the whole warp 4 of the structure 2. Also the second additional elements 6a result to be woven to the first thread-like elements 3a.

The second additional elements 6a preferably have a greater cross-sectional thickness then the second thread-like elements 4a. In this way, upon a pressure on the lateral zones 5 resulting from the action of suitable retaining members of the cloth 1 (not illustrated because they are not part of the present invention), the second additional thread-like elements 6a are deformed and, by virtue of the relative material and the increased thickness, they occlude the channels 7.

According to a preferential embodiment, the second additional thread-like elements 6a are preferably made of aramid and/or copper fibres.

It should however be specified that the material selected for the aforementioned second additional elements 6a may be anyone provided that it respects the characteristics of mechanical resistance, resistance to high temperatures and deformability.

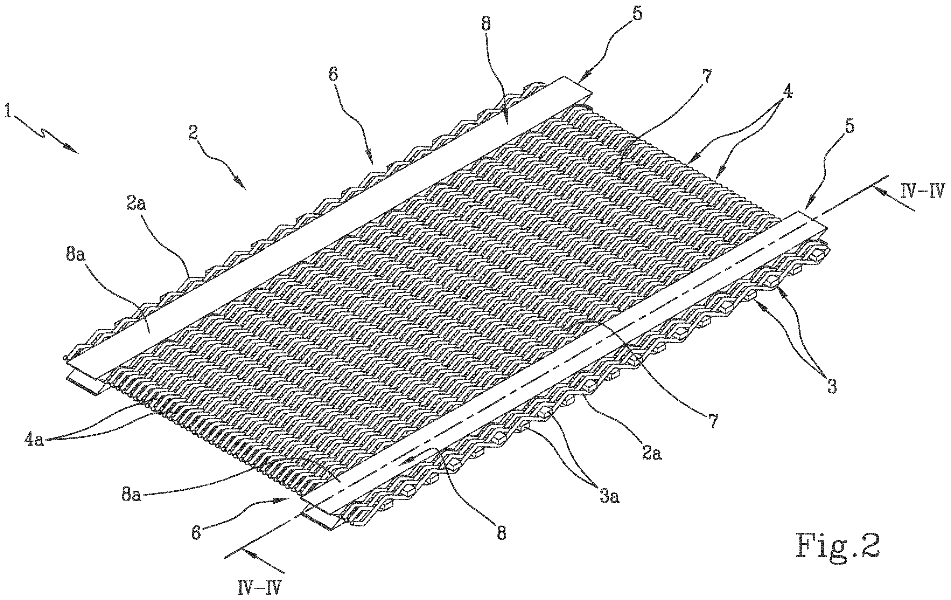

According to a second embodiment illustrated in figures 2, 4 and 4a, the deformation means 6 comprise a band 8 made of a material resistant to high temperatures and deformable if subjected to crushing.

In particular, the band 8 develops throughout the respective lateral zone 5 and consists of a resin inside which the second thread-like elements 4a are embedded, arranged at each zone 5.

In this case, all the second thread-like elements 4a are made of metallic material and remain anchored within the band 8. Moreover, a portion of the first thread-like elements 3a which pass through the aforementioned zone 5 remains embedded inside the resin band, too.

Preferably, the resin is composed of a silicone and/or epoxy material, such as for example two-component materials. Also in this case, the material chosen for making the band 8 can be anyone provided that it maintains suitable characteristics of deformability, mechanical resistance and resistance to high temperatures.

Advantageously, the band fills the spacings between the thread-like elements, thereby occluding the channels 7 at the aforementioned zones 5. The eventual passage of fluid through the channels 7 and towards the edges 2a of the structure 2 is therefore interrupted.

Each band 8 also defines respective opposite surfaces 8a and arranged outside the first and second thread-like elements 3a, 4a. Such surfaces 8a define a support for the action of suitable retaining members of the cloth 1 (not illustrated because they are not part of the present invention).

Finally, it should be noted that each lateral zone 5 is spaced from the longitudinal edge 2a of the structure 2 by a series of second thread-like elements 4a and an end portion of the first thread-like elements 3a. In this situation, also the deformation means 6, contained in the respective zones 5, are spaced from the edges 2a to occlude the passage of fluid through the channels before the edge 2a itself, that is to say in a more central zone of the structure 2.

The present invention overcomes the drawbacks of the prior art and provides significant advantages.

First of all, it should be noted that both embodiments determine the occlusion of the aforementioned channels 7 near the lateral zones 5. This results in the interruption of the fluid passage with the advantages derived from an optimal fluid sealing of the cloth 1.

It should also be considered that the first embodiment allows not to modify the structure of the cloth 1 by using second additional elements 6a which are inserted within the warp 4 according to the normal weaving methodologies. The second additional elements 6a, which are able to deform and have a greater thickness, occlude the channels 7 in the retaining condition of the cloth 1.

As regards the second embodiment, the channels 7 are directly occluded by means of the aforementioned band 8. In this case each band further determines a surface 8a for the support and the pressure of the retaining members of the cloth 1.

Also in this case, obtaining the bands 8 necessary for the sealing of lateral fluid is carried out simply by means of a resin which embeds the thread-like elements 3a, 4a at the lateral zones 5. This results in a particularly simple actuation of the deformation means 6 with the relative advantages in terms of operations for the creation of the entire cloth 1.

## Claims

1. Wire cloth comprising a woven structure (2) defined by:
- a weft (3) comprising a plurality of first thread-like elements (3a) made of metallic material; and
- a warp (4) woven with said weft and comprising a plurality of second thread-like elements (4a) made at least partially of metallic material;
said structure (2) further comprising at least one lateral area (5) parallel to said warp (4) approached to a respective edge (2a) and developing as a strip along the whole longitudinal development of the cloth; the lateral area (5) having deformation means (6) for occluding channels (7) defined between the first thread-like elements (3a) at said lateral zone (5);
**characterized in that** said deformation means (6) comprise a band (8), made of a material resistant to high temperatures and deformable if subjected to crushing to occlude said channels.

2. Cloth according to the previous claim, **characterized in that** said structure (2) comprises two lateral zones (5) opposite to each other, parallel to and near the end edges (2a) of the structure (2) itself; each lateral zone (5) having respective deformation means (6).

3. Cloth according to claim 1 or 2, **characterized in that** said deformation means (6) comprise second additional thread-like elements (6a), made of a material resistant to high temperatures and deformable if subjected to crushing to occlude said channels (7).

4. Cloth according to the previous claim, **characterized in that** said second additional thread-like elements (6a) have a greater cross-sectional thickness with respect to the second thread-like elements (4a).

5. Cloth according to claim 3 or 4, **characterized in that** said second additional thread-like elements (6a) are parallel to said second thread-like elements (4a) and woven with the first thread-like elements (3a).

6. Cloth according to any one of claims 3 to 5, **characterized in that** said second additional thread-like elements (6a) comprise aramid and/or copper fibres.

7. Cloth according to claim 2, **characterized in that** said second thread-like elements (4a) arranged at each lateral zone (5) are embedded in said band (8).

8. Cloth according to claim 7, **characterized in that** said band (8) comprises a silicone and/or epoxy resin.

9. Cloth according to any one of claims 7 and 8, **characterized in that** said band (8) defines respective opposite surfaces (8a) and arranged outside the first and second thread-like elements (3a, 4a).

10. Cloth according to claim 2, **characterized in that** each lateral zone (5) is spaced from the longitudinal edge (2a) of the woven structure (2) by a series of second thread-like elements (4a).

## Patentansprüche

1. Drahtgewebe umfassend eine gewebte Struktur (2), definiert durch:
- einen Schuss (3), der eine Vielzahl an ersten fadenartigen Elementen (3a) aus metallischem Material umfasst; und
- eine Kette (4), die mit dem Schuss gewebt ist und eine Vielzahl an zweiten fadenartigen Elementen (4a) umfasst, die zumindest teilweise aus metallischem Material bestehen;
wobei die Struktur (2) ferner zumindest einen seitlichen Bereich (5) parallel zu der Kette (4) umfasst, der sich einer jeweiligen Kante (2a) nähert und sich als Streifen entlang der gesamten Längserstreckung des Gewebes erstreckt; wobei der seitliche Bereich (5) Verformungsmittel (6) zum Verschließen von Kanälen (7) aufweist, die zwischen den ersten fadenartigen Elementen (3a) an der seitlichen Zone (5) definiert sind;
**dadurch gekennzeichnet, dass** die Verformungsmittel (6) ein Band (8) umfassen, das aus einem Material besteht, das gegen hohe Temperaturen beständig und verformbar ist, wenn es der Quetschung unterzogen wird, um die Kanäle zu verschließen.

2. Gewebe nach dem vorhergehenden Anspruch, **dadurch gekennzeichnet, dass** die Struktur (2) zwei einander gegenüberliegende seitliche Zonen (5) parallel zu und nahe den Endkanten (2a) der Struktur (2) selbst umfasst; wobei eine jede seitliche Zone (5) jeweilige Verformungsmittel (6) aufweist.

3. Gewebe nach Anspruch 1 oder 2, **dadurch gekennzeichnet, dass** die Verformungsmittel (6) zweite zusätzliche fadenartige Elemente (6a) umfassen, die aus einem Material bestehen, das gegen hohe Temperaturen beständig und verformbar ist, wenn es der Quetschung unterzogen wird, um die Kanäle (7) zu verschließen.

4. Gewebe nach dem vorhergehenden Anspruch, **dadurch gekennzeichnet, dass** die zweiten zusätzlichen fadenartigen Elemente (6a) eine größere Querschnittsdicke in Bezug auf die zweiten fadenartigen Elemente (4a) aufweisen.

5. Gewebe nach Anspruch 3 oder 4, **dadurch gekennzeichnet, dass** die zweiten zusätzlichen fadenartigen Elemente (6a) parallel zu den zweiten fadenartigen Elementen (4a) sind und mit den ersten fadenartigen Elementen (3a) gewebt sind.

6. Gewebe nach einem der Ansprüche 3 bis 5, **dadurch gekennzeichnet, dass** die zweiten zusätzlichen fadenartigen Elemente (6a) Aramid- und/oder Kupferfasern umfasst.

7. Gewebe nach Anspruch 2, **dadurch gekennzeichnet, dass** die zweiten fadenartigen Elemente (4a), die an einer jeden seitlichen Zone (5) angeordnet sind, in das Band (8) eingebettet sind.

8. Gewebe nach Anspruch 7, **dadurch gekennzeichnet, dass** das Band (8) ein Silikon und/oder Epoxidharz umfasst.

9. Gewebe nach einem der Ansprüche 7 und 8, **dadurch gekennzeichnet, dass** das Band (8) jeweils gegenüberliegende Flächen (8a) definiert und außerhalb der ersten und zweiten fadenartigen Elemente (3a, 4a) angeordnet ist.

10. Gewebe nach Anspruch 2, **dadurch gekennzeichnet, dass** eine jede seitliche Zone (5) von der Längskante (2a) der gewebten Struktur (2) durch eine Reihe von zweiten fadenartigen Elementen (4a) beabstandet ist.

## Revendications

1. Tissu en fil métallique comprenant une structure tissée (2) définie par :
- une trame (3) comprenant une pluralité de premiers éléments filiformes (3a) en matériau métallique ; et
- une chaîne (4) tissée avec ladite trame et comprenant une pluralité de seconds éléments filiformes (4a) réalisés au moins partiellement en matériau métallique ;
ladite structure (2) comprenant de plus au moins une zone latérale (5) parallèle à ladite chaîne (4) approchée à un bord respectif (2a) et se développant comme un ruban tout le long de tout le développement longitudinal du tissu ; la zone latérale (5) comportant des moyens de déformation (6) servant à fermer des canaux (7) définis entre les premiers éléments filiformes (3a) en correspondance de ladite zone latérale (5) ;
**caractérisé en ce que** lesdits moyens de déformation (6) comprennent une bande (8), constituée d'un matériau résistant aux hautes températures et déformable si elle est soumise à un écrasement pour fermer lesdits canaux.

2. Tissu selon la revendication précédente, **caractérisé en ce que** ladite structure (2) comprend deux zones latérales (5) opposées l'une à l'autre, parallèles aux / et proches des bords d'extrémité (2a) de la structure (2) elle-même ; chaque zone latérale (5) comportant des moyens de déformation respectifs (6).

3. Tissu selon la revendication 1 ou 2, **caractérisé en ce que** lesdits moyens de déformation (6) comprennent des seconds éléments filiformes (6a) supplémentaires, constitués d'un matériau résistant aux hautes températures et déformable s'ils sont soumis à un écrasement pour fermer lesdits canaux (7).

4. Tissu selon la revendication précédente, **caractérisé en ce que** lesdits seconds éléments filiformes (6a) supplémentaires ont une épaisseur de section transversale supérieure par rapport aux seconds éléments filiformes (4a).

5. Tissu selon la revendication 3 ou 4, **caractérisé en ce que** lesdits seconds éléments filiformes (6a) supplémentaires sont parallèles auxdits seconds éléments filiformes (4a) et tissés avec les premiers éléments filiformes (3a).

6. Tissu selon l'une quelconque des revendications 3 à 5, **caractérisé en ce que** lesdits seconds éléments filiformes (6a) supplémentaires comprennent des fibres d'aramide et/ou de cuivre.

7. Tissu selon la revendication 2, **caractérisé en ce que** lesdits seconds éléments filiformes (4a) disposés en correspondance de chaque zone latérale (5) sont incorporés dans ladite bande (8).

8. Tissu selon la revendication 7, **caractérisé en ce que** ladite bande (8) comprend une résine silicone et/ou époxy.

9. Tissu selon l'une quelconque des revendications 7 et 8, **caractérisé en ce que** ladite bande (8) définit des surfaces opposées (8a) respectives et disposées à l'extérieur des premier et second éléments filiformes (3a, 4a).

10. Tissu selon la revendication 2, **caractérisé en ce que** chaque zone latérale (5) est espacée du bord longitudinal (2a) de la structure tissée (2) par une série de seconds éléments filiformes (4a).
